# EUROPÄISCHE PATENTSCHRIFT

(11) **EP 3 034 832 B1**
(45) Veröffentlichungstag und Bekanntmachung des Hinweises auf die Patenterteilung: **13.06.2018**
(21) Anmeldenummer: 15196629.8
(22) Anmeldetag: 27.11.2015
(51) Int. Cl.: F02B 37/18, F16F 1/02

(54) **LADEEINRICHTUNG**
CHARGING DEVICE
DISPOSITIF DE CHARGEMENT

(30) Priorität: 19.12.2014 DE 102014226701
(43) Veröffentlichungstag der Anmeldung: 22.06.2016
(73) Patentinhaber: BMTS Technology GmbH & Co. KG, 70376 Stuttgart (DE)
(72) Erfinder: LUMMER, Dirk, 71634 Ludwigsburg (DE); GÖCKELMANN, Jochen, 73084 Salach (DE); TRIES, Timo, 71287 Weissach/Flacht (DE)
(74) Vertreter: BRP Renaud & Partner mbB Rechtsanwälte Patentanwälte Steuerberater

(56) Entgegenhaltungen:
- DE-A1-102010 049 466
- DE-A1-102010 055 382
- DE-A1-102011 079 600
- DE-A1-102011 088 034
- DE-A1-102013 208 245

## Beschreibung

Die vorliegende Erfindung betrifft ein Verfahren zum Herstellen einer Wastegate-Vorrichtung für einen Abgasturbolader, mit einem ersten Bauteil, das mittels eines Federelements gegen ein zweites Bauteil vorgespannt ist.

Aus der DE 11 2010 002 024 T5 ist eine gattungsgemäße Ladeeinrichtung bekannt, bei der zur Dämpfung und zur Reduzierung von Verschleiß am System Wastegate-Klappe/Wastegate-Hebel ein axial wirkendes Federelement vorgesehen ist. Die Ladeeinrichtung umfasst dabei einen Verdichter und eine Turbine, die ein Turbinengehäuse und eine Wastegate-Vorrichtung mit einer Regelklappe umfasst. Der Klappenteller der Regelklappe ist dabei über einen Hebel an einer im Turbinengehäuse über eine Buchse geführten Regelklappenwelle angeordnet, wobei der Klappenteller mittels des zuvor erwähnten Federelements gegen den Hebel vorgespannt ist.

Aus der DE 10 2012 101 322 A1 ist eine weitere Ladeeinrichtung mit einem Abgas-Bypasspfad bekannt, der mit einer Bypassventilvorrichtung versehen ist, die folgende Komponenten aufweist: Ein tellerartiges Ventilelement mit einer Dichtfläche und einem sich von letzterer weg erstreckenden Schaft, einem eine Abgas-Durchlassöffnung umschließenden und mit der Ventilelement-Dichtfläche zusammenwirkenden Ventilsitz für das Ventilelement, einem Ventilelement-Träger, mit dem das Ventilelement mittels seines Schafts mindestens in Richtung senkrecht zur Ventilelement-Dichtfläche beweglich verbunden ist, einem in einer Lagerbuchse verdrehbar gehaltene Spindel zwischen dem Ventilelement-Träger und einem quer zur Spindel verlaufenden ersten Bereich eines Stellhebels und ein Stellhebel-Betätigungselement, welches mit einem zweiten Stellhebel-Bereich schwenkbar verbunden ist. Um dabei den Verschleiß eines solchen Federelements sowie eventuell entstehende Geräusche zu minimieren, ist zumindest an einer ersten Position im Bereich der Verbindung zwischen dem Ventilelement und dem Ventilelement-Träger und/oder an einer zweiten Position im Bereich der Verbindung zwischen dem Stellhebel und dem Stellhebel-Betätigungselement ein ringförmiges Federelement vorgesehen.

Aus der WO 2014/011468 A1 ist eine weitere Ladeeinrichtung bekannt.

Weitere Ladeeinrichtungen mit Wastegate-Vorrichtungen sind aus der DE 10 2011 088 034 A1 und aus der DE 10 2011 079 600 A1 bekannt.

Nachteilig bei den aus dem Stand der Technik bekannten Ladeeinrichtungen ist jedoch, dass ein entsprechendes, eine Geräuschentwicklung minimierendes Federelement bereits während eines Fügeprozesses, beispielsweise eines Zapfens eines Klappentellers einer Wastegate-Vorrichtung mit einer Scheibe, montiert werden muss, wodurch nicht gänzlich ausgeschlossen werden kann, dass das Federelement eine mechanische und/oder thermische Vorschädigung erfährt.

Die vorliegende Erfindung beschäftigt sich daher mit dem Problem, für ein Verfahren zum Herstellen einer Wastegate-Vorrichtung eines Abgasturboladers der gattungsgemäßen Art eine verbesserte oder zumindest eine alternative Ausführungsform anzugeben, welche insbesondere eine Vorschädigung eines Federelements zuverlässig verhindert.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein Federelement zum Vorspannen eines ersten Bauteils gegenüber einem zweiten Bauteil als an einer Stelle offenen Sicherungsring, insbesondere C-förmig, auszubilden und sich dadurch in die Lage zu versetzen, diesen erst nach der eigentlichen Montage der beiden Bauteile miteinander zu montieren. Das Federelement kann somit in einem dem eigentlichen Fügeprozess der beiden Bauteile nachgelagerten Prozessschritt verlagert werden, wodurch eine mögliche Vorschädigung des Federelements, beispielsweise eine mechanische und/oder thermische Vorschädigung, zuverlässig ausgeschlossen werden kann. Darüber hinaus ist es mit dem erfindungsgemäßen Federelement deutlich besser möglich, genaue Abstände zwischen den beiden Bauteilen einzuhalten, da nach dem Prozess eine Messung möglich ist, was bei einem Verbau eines bisher bekannten, ringförmig geschlossenen Federelements nicht oder nur erschwert möglich war. Das erste Bauteil kann dabei beispielsweise als Plattenteller einer Wastegate-Vorrichtung ausgebildet sein, während das zweite Bauteil als Hebel der Wastegate-Vorrichtung ausgebildet ist. In einem ersten Arbeitsschritt ist es dabei möglich, den Klappenteller mit seinem Zapfen durch eine entsprechende Durchgangsöffnung des Hebels durchzustecken und auf der dem Klappenteller gegenüberliegenden Seite mit einem aufgestauchten Kopf oder einer angelöteten bzw. angeschweißten Scheibe (Gegenscheibe) zu fügen. Beim Verschweißen bzw. Verlöten der Scheibe mit dem Zapfen des Klappentellers wird dabei ein nicht unerheblicher Wärmeeintrag in den Zapfen erzeugt, welcher eine ebenfalls nicht unerhebliche Belastung eines in diesem Prozessschritt bislang bereits montierten Federelements bedeutet. Bei der erfindungsgemäßen Ladeeinrichtung kann das Fügen der beiden Bauteile, also des Klappentellers mit dem Hebel separat erfolgen, wobei erst in einem sich daran anschließenden Verfahrensschritt das einseitig offene Federelement von der Seite zwischen beispielsweise die Scheibe und den Hebel eingeschoben und dadurch die Vorspannung des ersten Bauteils gegenüber dem zweiten Bauteil erreicht wird. Durch den Umstand, dass das erfindungsgemäß ausgebildete Federelement erst nach dem Fügen der beiden Bauteile (Klappenteller und Hebel) montiert wird, ist eine thermische Belastung desselben komplett auszuschließen.

Bei einer vorteilhaften Weiterbildung der erfindungsgemäßen Lösung ist das Federelement zwischen dem Klappenteller und dem Hebel angeordnet. Eine derartige Ausführungsform ist beispielsweise bei einem auf der dem Klappenteller gegenüberliegenden Seite aufgestauchten Kopf denkbar, der lediglich eine Verankerung des Zapfens auf der dem Klappenteller gegenüberliegenden Seite darstellt. In diesem Fall kann das erfindungsgemäße Federelement einfach von der Seite zwischen dem Klappenteller und dem Hebel eingeschoben und dadurch die gewünschte Vorspannung hergestellt werden. Bislang musste das Federelement bereits vor dem Aufstauchen des eigentlichen Kopfes montiert werden, wodurch eine starke mechanische Belastung des Federelements beim Stauchen des Kopfes nicht auszuschließen war. Diese starke mechanische Belastung kann nunmehr vollständig ausgeschlossen werden, was sich besonders vorteilhaft auf die Federeigenschaften des Federelements auswirkt, da diese aufgrund der fehlenden mechanischen Belastung nicht beeinflusst werden.

Bei einer alternativen Ausführungsform der erfindungsgemäßen Ladeeinrichtung ist das Federelement zwischen dem Hebel und einer mit dem Zapfen verbundenen Scheibe angeordnet. Diese Scheibe wird mit dem Zapfen üblicherweise geschweißt, verlötet, vernietet oder verstemmt, wodurch eine nicht unerhebliche Temperaturbelastung oder mechanische Belastung auf den Zapfen bzw. den Klappenteller einwirkt. Durch das erfindungsgemäße Federelement ist es nun erstmals möglich, dieses erst in einem sich an das Fügen nachfolgenden Prozessschritt zu montieren, wodurch bislang auf das Federelement einwirkende thermischen und/oder mechanischen Belastungen nicht mehr auftreten.

Alternativ zu der mit dem Zapfen verbundenen Scheibe, kann das Federelement auch in eine an dem Zapfen angeordnete Nut eingreifen, die sich ringförmig auf der dem glatten Teller gegenüberliegenden Seite des Hebels um den Zapfen herum erstreckt. Durch eine derartige Ausführungsform kann die in den vorherigen Absätzen erwähnte Scheibe gänzlich entfallen, wodurch nicht nur die Teilevielfalt reduziert, sondern auch zusätzliche Montagekosten eingespart werden können.

Bei einer weiteren vorteilhaften Ausführungsform der erfindungsgemäßen Lösung sind das erste Bauteil als Aktuatorenhebel und das zweite Bauteil als Wastegatebuchse oder als Turbinengehäuse ausgebildet. Bereits die in den vorherigen Absätzen beschriebenen Ausführungsformen der beiden Bauteile lassen erahnen, welch mannigfaltige Einsatzmöglichkeiten der erfindungsgemäß an einer Stelle offene Sicherungsring bei der federnden Vorspannung zweier Bauteile mit sich bringt.

Zweckmäßig ist das Federelement als Tellerfeder ausgebildet. Tellerfedern lassen besonders hohe Federkräfte zu, was im vorliegenden Fall optimal dazu genutzt werden kann, Geräuschemissionen, die beispielsweise durch ein Klappern des Klappentellers entstehen würden, auszuschalten.

Die Erfindung beruht weiter auf dem allgemeinen Gedanken, das zuvor beschriebene Federelement als an einer Stelle offenen Sicherungsring auszubilden und dadurch ein vollständig neues Federelement bereitstellen zu können, welches vorteilhafterweise die Möglichkeit eröffnet, dieses erst in einem späteren Verfahrensschritt montieren zu müssen, in welchem der Klappenteller bereits montiert ist, da der Sicherungsring über seine offene Stelle einfach angeschoben werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine Wastegate-Vorrichtung einer erfindungsgemäßen Ladeeinrichtung,
- Fig. 2: eine Darstellung wie in Fig. 1, jedoch bei einer anderen Ausführungsform eines Zapfens,
- Fig. 3: eine Draufsicht auf Fig. 2,
- Fig. 4: eine Draufsicht auf ein erfindungsgemäßes Federelement,
- Fig. 5: eine Schnittdarstellung durch das gemäß der Fig. 4 gezeigte Federelement.

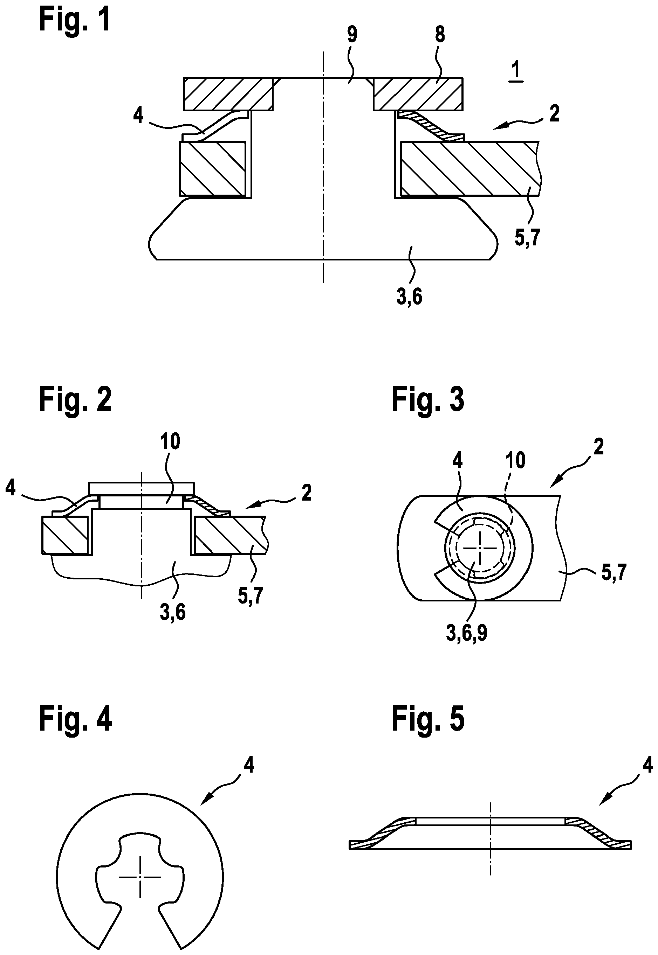

Entsprechend der Fig. 1, weist eine erfindungsgemäße Ladeeinrichtung 1, von welcher lediglich ein Ausschnitt einer Wastegate-Vorrichtung 2, gezeigt ist, ein erstes Bauteil 3 auf, das mittels eines Federelements 4 gegen ein zweites Bauteil 5 vorgespannt ist. Das erste Bauteil 3 ist im vorliegenden Fall als Klappenteller 6 ausgebildet, wogegen das zweite Bauteil 5 als Hebel 7 der Wastegate-Vorrichtung 2 ausgebildet ist. Selbstverständlich sollen dabei die Bezeichnungen "erstes und zweites Bauteil 3, 5" stellvertretend für generell über ein erfindungsgemäßes Federelement 4 gegeneinander verspannbare Bauteile stehen, so dass das erste Bauteil 3 auch als Aktuatorenhebel und das zweite Bauteil 5 als Wastegatebuchse oder als Turbinengehäuse ausgebildet sein können.

Erfindungsgemäß ist nun das Federelement 4 als an einer Stelle offener Sicherungsring ausgebildet und weist dabei eine im Wesentlichen C-förmige Gestalt auf, was besonders gut aus der Darstellung in Fig. 4 erkennbar ist. Durch die C-förmige Gestalt des erfindungsgemäßen Federelements 4 ist es möglich, dieses auch erst nach einem Fügen des ersten Bauteils 3 mit beispielsweise einer Scheibe 8 (vergleiche Figur 1) zu montieren, was bislang bei einer geschlossenen ringförmigen Ausbildung des Federelements nicht möglich war. Durch die Möglichkeit der nachträglichen Montage können insbesondere die beim Fügen der Scheibe 8 mit dem Klappenteller 3 auftretenden, hohen mechanischen und/oder thermischen Belastungen vermieden werden.

Betrachtet man die Fig. 1, so kann man erkennen, dass das Federelement 4 zwischen dem Hebel 5 und der mit einem Zapfen 9 des Klappentellers 3 verbundenen Scheibe 8 angeordnet ist. Die Scheibe 8 kann dabei mit den Zapfen 9 verschweißt, verstemmt, verlötet oder aber auch vernietet sein.

Alternativ hierzu ist es auch denkbar, dass das Federelement 4 in eine an dem Zapfen 9 angeordnete Nut 10 eingreift, wie dies beispielsweise aus Fig. 2 und 3 zu erkennen ist. In diesem Fall kann sowohl die Scheibe 8 entfallen als auch deren vergleichsweise aufwändige Montage, wodurch Vorteile hinsichtlich der Herstellungskosten und der Herstellungszeit erzielbar sind. Das Federelement 4 selbst ist üblicherweise aus Federstahl ausgebildet und darüber hinaus beispielsweise in der Art einer Tellerfeder, was besonders deutlich aus Fig. 5 zu erkennen ist. Hierdurch lassen sich vergleichsweise hohe Federkräfte erzielen. Als Federstahl für das Federelement 4 kann beispielsweise ein hochlegierter Federstahl, insbesondere aus einer Nickelbasislegierung, verwendet werden. Die Montage des erfindungsgemäßen Federelements 4 gestaltet sich dabei vergleichsweise einfach, da es lediglich nach dem Montieren des ersten Bauteils 3 am zweiten Bauteil 5 entsprechend um den Zapfen 9 bzw. in die Nut 10 eingeschoben werden muss. In einer Ausbildung als Tellerfeder lassen sich auch besonders hohe Axialkräfte auf den Zapfen 9 und damit auf den Klappenteller 6 aufbringen. Rein theoretisch ist es selbstverständlich auch denkbar, dass das Federelement 4 zwischen dem Klappenteller 6 und dem Hebel 7 angeordnet ist, das heißt auf der gleichen Seite des Hebels 7, wie der Klappenteller 6.

## Patentansprüche

1. Verfahren zum Herstellen einer Wastegate-Vorrichtung (2) für einen Abgasturbolader mit einem ersten Bauteil (3), das mittels eines Federelements (4), welches als an einer Stelle offener Sicherungsring ausgebildet ist, gegen ein zweites Bauteil (5) vorgespannt ist, wobei die Bauteile (3, 5) durch einen Fügeprozess miteinander montiert werden und das Federelement (4) in einem dem Fügeprozess der beiden Bauteile (3, 5) nachgelagerten Prozessschritt montiert wird.

2. Verfahren nach Anspruch 1,
**dadurch gekennzeichnet,**
**dass** das erste Bauteil (3) als Klappenteller (6) der Wastegate-Vorrichtung (2) und das zweite Bauteil (5) als Hebel (7) der Wastegate-Vorrichtung (2) ausgebildet sind.

3. Verfahren nach Anspruch 2,
**dadurch gekennzeichnet,**
**dass** das Federelement (4) zwischen dem Klappenteller (6) und dem Hebel (7) angeordnet wird.

4. Verfahren nach Anspruch 2,
**dadurch gekennzeichnet,**
**dass** das Federelement (4) zwischen dem Hebel (7) und einer mit einem Zapfen (9) des Klappentellers (6) verbundenen Scheibe (8) angeordnet wird.

5. Verfahren nach Anspruch 4,
**dadurch gekennzeichnet,**
**dass** die Scheibe (8) mit dem Zapfen (9) verschweißt, verlötet, verstemmt oder vernietet wird.

6. Verfahren nach einem der Ansprüche 1 bis 3,
**dadurch gekennzeichnet,**
**dass** das Federelement (4) in eine an einem Zapfen (9) angeordnete Nut (10) eingreift.

7. Verfahren nach Anspruch 1, i
**dadurch gekennzeichnet,**
**dass** das erste Bauteil (3) als Aktuatorenhebel und das zweite Bauteil (5) als Wastegatebuchse oder als Turbinengehäuse ausgebildet sind.

8. Verfahren nach einem der Ansprüche 1 bis 7,
**dadurch gekennzeichnet,**
**dass** das Federelement (4) aus Federstahl, insbesondere aus einer Nickelbasislegierung, ausgebildet ist.

9. Verfahren nach einem der Ansprüche 1 bis 8,
**dadurch gekennzeichnet,**
**dass** das Federelement (4) als Tellerfeder ausgebildet ist.

## Claims

1. Method for producing a charging device (1), in particular an exhaust gas turbocharger, with a first component (3) which is prestressed against a second component (5) by means of a spring element (4), wherein the spring element (4) is in the form of a securing ring which is open at one location, wherein the components (3, 5) are mounted in a joining process and the spring element (4) is mounted in a process step after the joining process of the components (3, 5).

2. Method according to Claim 1,
**characterized in that**
the first component (3) is in the form of a flap plate (6) of a wastegate apparatus (2), and the second component (5) is in the form of a lever (7) of the wastegate apparatus (2).

3. Method according to Claim 2,
**characterized in that**
the spring element (4) is arranged between the flap plate (6) and the lever (7).

4. Method according to Claim 2,
**characterized in that**
the spring element (4) is arranged between the lever (7) and a disc (8) which is connected to a pin (9) of the flap plate (6).

5. Method according to Claim 4,
**characterized in that**
the disc (8) is welded, braised, caulked or riveted to the pin (9).

6. Method according to one of Claims 1 to 3,
**characterized in that**
the spring element (4) engages in a groove (10) arranged on a pin (9).

7. Method according to Claim 1,
**characterized in that**
the first component (3) is in the form of an actuator lever, and the second component (5) is in the form of a wastegate bushing or in the form of a turbine housing.

8. Method according to one of Claims 1 to 7,
**characterized in that**
the spring element (4) is made of spring steel, in particular of a nickel-based alloy.

9. Method according to one of Claims 1 to 8,
**characterized in that**
the spring element (4) is in the form of a disc spring.

## Revendications

1. Procédé de fabrication d'un dispositif de décharge (2) pour un turbocompresseur à gaz d'échappement avec un premier composant (3), qui est précontraint au moyen d'un élément de ressort (4), qui est réalisé en tant que circlip ouvert à un endroit, contre un second composant (5), dans lequel les composants (3, 5) sont montés par un processus d'assemblage entre eux et l'élément de ressort (4) est monté dans une étape de processus en aval du processus d'assemblage des deux composants (3, 5).

2. Procédé selon la revendication 1,
**caractérisé en ce**
**que** le premier composant (3) est réalisé en tant que plateau à clapet (6) du dispositif de décharge (2) et le second composant (5) est réalisé en tant que levier (7) du dispositif de décharge (2).

3. Procédé selon la revendication 2,
**caractérisé en ce**
**que** l'élément de ressort (4) est disposé entre le plateau à clapet (6) et le levier (7).

4. Procédé selon la revendication 2,
**caractérisé en ce**
**que** l'élément de ressort (4) est disposé entre le levier (7) et un disque (8) raccordé à un tenon (9) du plateau à clapet (6).

5. Procédé selon la revendication 4,
**caractérisé en ce**
**que** le disque (8) est soudé, brasé, maté ou riveté au tenon (9).

6. Procédé selon l'une quelconque des revendications 1 à 3,
**caractérisé en ce**
**que** l'élément de ressort (4) se met en prise dans une rainure (10) disposée sur un tenon (9).

7. Procédé selon la revendication 1,
**caractérisé en ce**
**que** le premier composant (3) est réalisé en tant que levier d'actionneur et le second composant (5) est réalisé en tant que douille de décharge ou en tant que boîtier de turbine.

8. Procédé selon l'une quelconque des revendications 1 à 7,
**caractérisé en ce**
**que** l'élément de ressort (4) est réalisé en acier à ressorts, en particulier en un alliage à base de nickel.

9. Procédé selon l'une quelconque des revendications 1 à 8,
**caractérisé en ce**
**que** l'élément de ressort (4) est réalisé en tant que rondelle-ressort.
